# EUROPEAN PATENT APPLICATION

(11) **EP 2 983 122 A1**
(43) Date of publication of application: **10.02.2016**
(21) Application number: 14179865.2
(22) Date of filing: 05.08.2014
(51) Int. Cl.: G06Q 30/02

(54) **Personalized development of products and services based on intrinsic motivators**

(71) Applicant: Bogner, Lutz E., 82166 Gräfelfing (DE); Barnewitz, Sandra, 86899 Landsberg am Lech (DE); Bogner, Doris, 82166 Gräfelfing (DE)
(72) Inventor: Barnewitz, Torsten, 86899 Landsberg am Lech (DE)

(57) **Abstract**

The present invention relates to a method for the personalized development of products and services based on the matching with intrinsic personalized motivators, the method comprising: (a) receiving in a controller a respective quantitative rating being indicative of a scaled value for each of the plurality of intrinsic motivators associated with a product or service to be personalized; (b) receiving in a controller a respective quantitative rating being indicative of a scaled value for each of the plurality of intrinsic motivators associated with a test subject; (c) assigning the respective quantitative rating obtained in step (a) with the respective quantitative rating obtained in step (b); and (d) transmitting from the controller, based upon the assignment obtained in step (c), a profile of intrinsic motivators being indicative for the test subject in order to personalize a product or service. Further particular embodiments of the method also comprise the matching with the sensory perception of the test subject and/or the matching with biometric and/or physiologic characteristics of the test subject. The invention further relates to a corresponding computer system for performing this method.

## Description

### FIELD OF THE INVENTION

The present invention relates to the personalized development of products and services based on the matching with intrinsic personalized motivators, and optionally with sensory perception, biometric and/or physiologic characteristics.

### BACKGROUND OF THE INVENTION

In today's world, a customer may often find it beneficial to receive assistance in making a decision as to which products or services should be selected. A sheer number of choices presented by a number products or services available and a number of vendors and venues may be overwhelming. Decision making may be further complicated by various other factors, such as time constraints faced by a user. Time pressures to make a decision on which product or service to purchase make it difficult for a customer to conduct detailed research into various products or services available. As a result, a customer is often forced into a decision to purchase with little understanding about whether the product or service selected will prove satisfactory to the customer. Decision making should be easier if pre-existing advice in the form of evaluations or technical specifications would be available, in particular pre-existing advice being based on the personalized preferences and motivations of a customer.

Advertisement may be helpful, but does not fully remedy the problem since advertising is almost as much art as it is science. Furthermore, advertising agencies rather attempt to ascertain what will appeal to the masses, and not a particular individual, and then position products or services in a light which it guesses will sell those products. Demographic data is collected and reviewed to study which products appeal to various demographic groups, and advertisement media may be tailored to reach those demographic groups. However, the personal preferences and motivations are not recorded and covered by such approach.

Online sales have allowed advertising to evolve, and products or services may now be allowed to a user for the customer to purchase based upon personal preferences, for example, illustrated by the purchasing history of the user. The advertising agency and seller may also have additional data sources to quantify user demand which the advertiser and seller may analyze and study to better position themselves with respect to segments of society that may purchase their goods. Again, however, such analysis will not reflect personal preferences of a particular customer.

So far, there is no tool available that records intrinsic personalized motivators, optionally along with sensory perception and/or additional biometric and/or physiologic characteristics of a potential customer, to process data on various available products or services, and to equate those products on a personal basis in order to ascertain which products or services will prove to be satisfactory to the customer.

Hence, it is an object of the present invention to provide for such tool that allows for the personalized development of products and services based on the matching with intrinsic personalized motivators.

### SUMMARY OF THE INVENTION

In one aspect, the present invention relates to a method for the personalized development of products and services based on the matching with intrinsic personalized motivators, the method comprising: (a) receiving a controller unit a respective quantitative rating being indicative of a scaled value for each of the plurality of intrinsic motivators associated with a product or service to be personalized; (b) receiving in a controller unit a respective quantitative rating being indicative of a scaled value for quantitative rating obtained in step (a) with the respective quantitative rating obtained in each of the plurality of intrinsic motivators associated with a test subject; (c) assigning the respective step (b); and (d) transmitting from the controller unit, based upon the assignment obtained in step (c), a profile of intrinsic motivators being indicative for the test subject in order to personalize a product or service.

In particular embodiments, the plurality of intrinsic motivators employed in step (a) and step (b) independently comprises at least five, particularly at least ten, and more particularly at least 20 intrinsic motivators.

Preferably, the respective quantitative ratings obtained in step (a) and step (b) are calculated based on cumulative scaled values for the entire plurality of intrinsic motivators.

In other particular embodiments, the method further comprises the matching with the sensory perception of the test subject, comprising: (b') receiving in a controller unit a respective quantitative rating being indicative of a scaled value for each preferred way of individual sensory perception associated with the test subject; and (c) assigning the respective quantitative rating obtained in step (a) with the respective quantitative rating obtained in step (b), and the respective quantitative rating obtained in step (b').

In yet other particular embodiments, the method further comprises the matching with biometric and/or physiologic characteristics of the test subject, comprising: (b") receiving in a controller unit a respective quantitative rating being indicative of a scaled value for each of the biometric and/or physiologic characteristics associated with the test subject; and (c) assigning the respective quantitative rating obtained in step (a) with the respective quantitative rating obtained in step (b), the respective quantitative rating obtained in step (b"), and optionally the respective quantitative rating obtained in step (b').

In other preferred embodiments, the method further comprises (e) storing the profile of intrinsic motivators obtained in step (d) on a computer-readable storage medium.

In yet other preferred embodiments, the identity of the test subject is not disclosed along with the profile of intrinsic motivators determined.

In other particular embodiments, the respective quantitative ratings obtained in step (a), step (b), step (b'), and step (b") are received in the controller based on manual input by means of keyboard or touchscreen.

In alternative particular embodiments, the respective quantitative ratings obtained in step (a), step (b), step (b'), and step (b") are received in the controller unit based on speech input and/or based on visual input by means of a camera.

In yet other particular embodiments, the respective quantitative ratings obtained in either one or both of step (a) and step (b) are determined by using standardized psychometric analyses.

In yet other particular embodiments, the preferred ways of individual sensory perception determined in step (b') are selected from the group consisting of seeing, hearing, smelling, tasting, and touching.

In yet other particular embodiments, the biometric and/or physiologic characteristics determined in step (b") are selected from the group consisting of face recognition parameters and electrical conductivity of the skin.

In yet other particular embodiments, the controller unit is part of a computer system (e.g. a laptop or a mobile device, such as a cell phone).

In a further aspect, the present invention relates to a computer system being adapted for performing the personalization of products and services based on the matching with intrinsic personalized motivators, the system comprising: a controller unit for receiving and processing a respective quantitative rating being indicative of a scaled value for each of the plurality of intrinsic motivators associated with a product or service to be personalized and for receiving and processing a respective quantitative rating being indicative of a scaled value for each of the plurality of intrinsic motivators associated with a test subject; and a unit for transmitting from the controller unit, based upon the assignment of the respective quantitative ratings processed by the controller unit, a profile of intrinsic motivators being indicative for the test subject in order to personalize a product or service.

In yet other particular embodiments, the method further comprises (f) assigning the profile of intrinsic motivators obtained in step (d) with one or more chemical and/or physical parameters of the product or service being personalized.

### BRIEF DESCRIPTION OF THE DRAWINGS

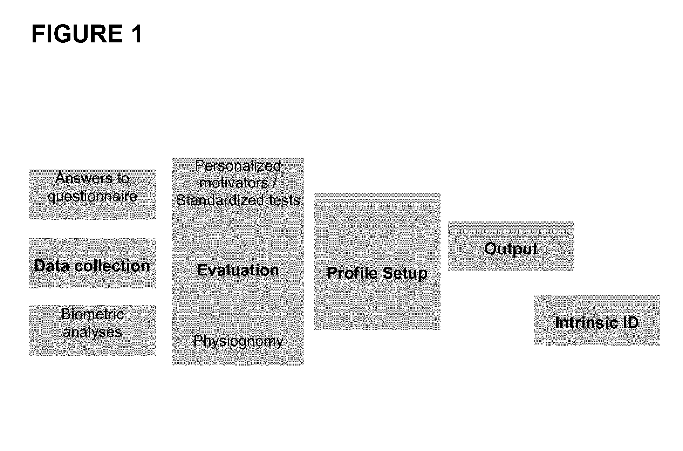

**FIGURE 1** schematically illustrates the basic principle underlying the method according to the present invention involving data collection, such as answers of the test subject provided in a questionnaire or biometric analyses, evaluation of the data, e.g., by performing standardized test for determining intrinsic personalized motivators or by recording physiognomic data, preferred sensory perception, or the like, setup of a personalized profile reflecting personal preferences, data output resulting in an intrinsic profile that is to be employed for the personalized development of products and services.

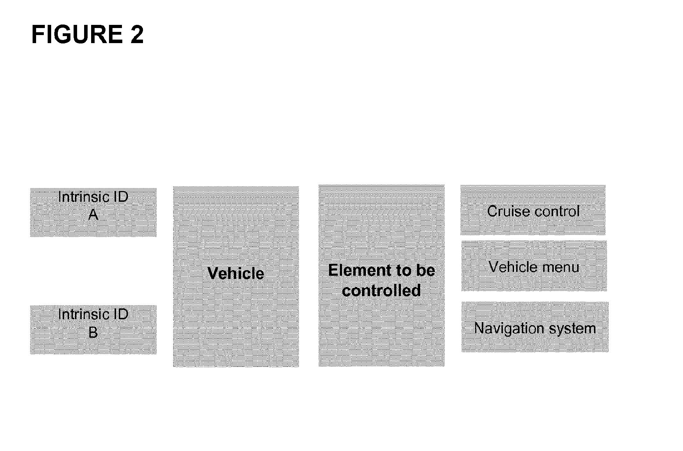

**FIGURE 2** schematically illustrates a specific embodiment of the method according to the present invention relating to the control of the driving characteristics of a vehicle based on the intrinsic personalized motivators and associated biometric and/or physiologic data of the driver. For example, two intrinsic profiles may be generated for the driver, such as one based on biometric data (e.g., the dilatation of the pupils, detected via the rear-view mirror) and/or physiologic data (e.g., the sweating at the hands, detected via sensors at the steering wheel), and the other one based on personal motivators (e.g., resistance to stress). The data are collected and evaluated, for example, also by comparison to a reference group, resulting in a certain data output that is matched by one or more elements to be controlled in the vehicle, further resulting in a specific adaptation of one or more of cruise control, vehicle menu, and navigation system reflecting the personal preferences, motivators and physiological constitution of the driver.

### DETAILED DESCRIPTION OF THE INVENTION

The present invention will be described in the following with respect to particular embodiments and with reference to certain drawings but the invention is to be understood as not limited thereto but only by the appended claims. The drawings described are only schematic and representative and are to be considered non-limiting.

Where the term "comprising" is used in the present description and claims, it does not exclude other elements or steps. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Where an indefinite or definite article is used when referring to a singular noun e.g. "a", "an" or "the", this includes a plural of that noun unless specifically stated otherwise.

In case, numerical values are indicated in the context of the present invention the skilled person will understand that the technical effect of the feature in question is ensured within an interval of accuracy, which typically encompasses a deviation of the numerical value given of ± 10%, and preferably of ± 5%.

Furthermore, the terms first, second, third, (a), (b), (c), and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Further definitions of term will be given in the following in the context of which the terms are used. The following terms or definitions are provided solely to aid in the understanding of the invention. These definitions should not be construed to have a scope less than understood by a person of ordinary skill in the art.

In one aspect, the present invention relates to a method for the personalized development of products and services based on the matching with intrinsic personalized motivators, the method comprising:
(a) receiving in a controller unit a respective quantitative rating being indicative of a scaled value for each of the plurality of intrinsic motivators associated with a product or service to be personalized;
(b) receiving in a controller unit a respective quantitative rating being indicative of a scaled value for each of the plurality of intrinsic motivators associated with a test subject;
(c) assigning the respective quantitative rating obtained in step (a) with the respective quantitative rating obtained in step (b); and
(d) transmitting from the controller unit, based upon the assignment obtained in step (c), a profile of intrinsic motivators being indicative for the test subject in order to personalize a product or service.

The present invention provides for a method including a controller unit for receiving and processing data (that is, including a processor unit as such), and a unit for transmitting from the controller unit, based upon the assignment of the respective quantitative ratings processed by the controller unit, a profile of intrinsic motivators being indicative for the test subject in order to personalize a product or service. The system further includes executable software that is executable on demand for assessing intrinsic motivators and matching them with products and/or services to be personalized for a particular test subject. The method to be performed receives subjective (i.e. intrinsic) and objective data of a test person, processes and transforms these data into a personalized profile, and assigns this information with intrinsic personalized motivators. Optionally, this personalized information can be further supplemented with sensory perception data and/or biometric characteristics and/or physiologic characteristics of the test person. The entity of the data results in a personalized profile that is then matched with personalized data associated with the products and/or services to be personalized, for example data obtained from a reference group of subjects.

In particular embodiments, the controller unit is part of a computer system, such as a desktop computer, a laptop or a mobile device, such as a cell phone, a diagnostic apparatus, and the like. In a specific embodiments, the computer system relates to cloud computing.

Intrinsic personalized motivators may be on a conscious or unconscious level and access values inherent in a test subject. Typically, the test subject will provide value related data as input into a computerized apparatus, wherein the data may be processed by a programmable algorithm to correlate the input data with one or more core values useful to make a decision whether or not a product and/or service matches with the intrinsic personalized motivators of the test subject.

The profile of intrinsic personalized motivators of a test subject obtained may be stored on a suitable computer-readable storage medium, for example on a SIM card or a microchip, in a mobile phone or the on-board computer of a vehicle.

In particular preferred embodiments, the identity of the test subject is not disclosed along with the profile of intrinsic motivators determined. In other words, the privacy of the test subject is maintained. The profile is thereby stored without any link to the identity of a test subject. Rather, the personalized profile stored may be used as a reference (e.g., as a database) for assessing another test subject, thus resulting in a further "fine-tuning" of quality of data obtained.

The method of the present invention comprises the receiving of a respective quantitative rating being indicative of a scaled value for each of the plurality of intrinsic motivators associated with a product or service to be personalized, and the receiving of a respective quantitative rating being indicative of a scaled value for each of the plurality of intrinsic motivators associated with a test subject. The term "scaled value", as used herein, denotes that the quantitative ratings, that is, the primary data obtained, are transformed by employing one or more computer algorithms into a relative numerical value within a particular scale of values associated with a particular intrinsic motivator to be assessed.

In particular embodiments, the plurality of intrinsic motivators employed in step (a) and step (b) independently comprises at least five, particularly at least ten, and more particularly at least 20 intrinsic motivators. The term "intrinsic motivator", as used herein, refers to any psychological factor associated with a test subject, wherein such factor influences the satisfaction with a decision taken by the test subject.

The quantitative ratings obtained in step (a) and step (b) can be further processed individually and may also be grouped and further processed according to the specific requirements of an application to be employed. Preferably, however, the respective quantitative ratings obtained in step (a) and step (b) are each calculated based on cumulative scaled values for the entire plurality of intrinsic motivators.

In particular embodiments, the respective quantitative ratings obtained in either one or both of step (a) and step (b) are determined by using standardized psychometric analyses which are well established in the art, such as Myers Briggs Type Indicator (MBTI) test, the Five Factor Model (FFM) or the Personal Life Driver analysis. The method according to the present invention can be performed by employing a single standardized psychometric analysis or a combination of two or more such tests.

In particular embodiments of the present invention, the method further comprises the matching with the sensory perception of the test subject, comprising:
(b') receiving in a controller unit a respective quantitative rating being indicative of a scaled value for each preferred way of individual sensory perception associated with the test subject; and
(c) assigning the respective quantitative rating obtained in step (a) with the respective quantitative rating obtained in step (b), and the respective quantitative rating obtained in step (b').

Preferably, the ways of individual sensory perception determined in step (b') are selected from the group consisting of seeing, hearing, smelling, tasting, and touching. Within the present invention, the determination of sensory perception may also comprise the analysis of two or more of the group consisting of seeing, hearing, smelling, tasting, and touching. The determination of sensory perception may be accomplished by employing standard detection systems, such as cameras, acoustic sensor systems, olfactory detectors, and the like.

In other particular embodiments of the present invention, the method further comprises the matching with biometric and/or physiologic characteristics of the test subject, comprising:
(b") receiving in a controller unit a respective quantitative rating being indicative of a scaled value for each of the biometric and/or physiologic characteristics associated with the test subject; and
(c) assigning the respective quantitative rating obtained in step (a) with the respective quantitative rating obtained in step (b), the respective quantitative rating obtained in step (b"), and optionally the respective quantitative rating obtained in step (b').

Preferably, the biometric and/or physiologic characteristics determined in step (b") are selected from the group consisting of face recognition parameters, such as the dilatation of the pupils or reddened skin, e.g. as an indicator of stress, and electrical conductivity of the skin, for example by measuring the sweating at the hands of a test subject. Further characteristics to be analyzed may also include metabolic rates, blood levels of hormones (e.g., adrenaline, cortisol, insulin), neurotransmitters (e.g., dopamine, serotonin, acetylcholine), neuropeptides (e.g. the opioid inhibitory endorphins), and the like. Such characteristics may be determined and evaluated by employing standard medical and/or biochemical testing. In specific embodiments, the method additionally and/or alternatively comprises a comparison of the specific values obtained from the test subject with reference values such as data retrieved from the scientific or clinical literature.

In particular embodiments of the method, the respective quantitative ratings obtained in step (a), step (b), step (b'), and step (b") are received in the controller unit based on manual input by means of keyboard or touchscreen.

In other particular embodiments, the respective quantitative ratings obtained in step (a), step (b), step (b'), and step (b") are received in the controller based on speech input and/or based on visual input by means of a camera.

In yet other particular embodiments, the respective quantitative ratings obtained in step (a), step (b), step (b'), and step (b") are received in the controller unit based on a combination of manual input, speech input and/or visual input by means of a camera.

In a specific embodiment, the method further comprises (f) assigning the profile of intrinsic motivators obtained in step (d) with one or more chemical and/or physical parameters of the product or service being personalized. Examples of such chemical and/or physical parameters include hardness, durability, density, elasticity, and the like.

In a further aspect, the present invention relates to a computer system being adapted for performing the personalization of products and services based on the matching with intrinsic personalized motivators, the system comprising:
a controller unit for receiving and processing a respective quantitative rating being indicative of a scaled value for each of the plurality of intrinsic motivators associated with a product or
service to be personalized and for receiving and processing a respective quantitative rating being indicative of a scaled value for each of the plurality of intrinsic motivators associated with a test subject; and
a unit for transmitting from the controller unit, based upon the assignment of the respective quantitative ratings processed by the controller unit, a profile of intrinsic motivators being indicative for the test subject in order to personalize a product or service.

The invention is further described by the following examples, which are solely for the purpose of illustrating specific embodiments of this invention, and are not to be construed as limiting the claimed subject matter in any way.

### EXAMPLES

### Example 1: TV advertising

The method of the present invention may be employed for personalizing advertising on television. Personal intrinsic motivators can be determined by means of a camera arranged at the screen and detecting biometric data/face recognition parameters. The remote control can be equipped with a touchscreen for detecting conductivity of the skin. Furthermore, the voice of the user can be recorded via the remote control and analyzed for stress. All parameters are received in a computer server and processed in comparison to a reference. The entity of scaled values for each of the intrinsic motivators results in a profile of the user that is indicative in order to select TV programs or movies to be played. For example, indicates the profile of the user that he is stressed, a relaxing movie is selected.

### Example 2: Personalized menu control in a vehicle

The method of the present invention may be employed in a vehicle in order to personalize vehicle handling and driving characteristics. The personal intrinsic motivators can be detected via a camera in the rear mirror and/or the front shield (e.g., for detecting stress or calmness) and sensors in the steering wheel (e.g. for detecting conductivity of the skin). For example, for a driver who is primarily focusing of safety aspects relevant parameters such as road surface, weather conditions, and gas consumption will predominantly be incorporated when establishing a corresponding profile. On the other hand, for a sportive driver the focus will be shifted towards parameters such as motor activity. Furthermore, for a driver who is stressed when entering the vehicle a corresponding profile of intrinsic motivators might result in an activation of speed control, and the like.

The present invention illustratively described herein may suitably be practiced in the absence of any element or elements, limitation or limitations, not specifically disclosed herein. Thus, for example, the terms "comprising", "including", "containing", etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention has been specifically disclosed by embodiments and optional features, modifications and variations of the inventions embodied therein may be resorted to by those skilled in the art, and that such modifications and variations are considered to be within the scope of this invention.

The invention has been described broadly and generically herein. Each of the narrower species and sub-generic groupings falling within the generic disclosure also form part of the invention. This includes the generic description of the invention with a proviso or negative limitation removing any subject matter from the genus, regardless of whether or not the excised material is specifically recited herein.

Other embodiments are within the following claims. In addition, where features or aspects of the invention are described in terms of Markush groups, those skilled in the art will recognize that the invention is also thereby described in terms of any individual member or subgroup of members of the Markush group.

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that may contain, or store, a program for use, by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that may communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++, or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that may direct a computer, other programmable data processing apparatus, or other devices to function in a particular manner, such that the instructions stored in the computer readable medium produce an article of manufacture including instructions, which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus, or other devices to produce a computer implemented process such that the instructions, which execute on the computer or other programmable apparatus, provide processes for implementing the functions/acts specified in the flowchart and/or block diagram, block, or blocks.

The block diagrams in the figures illustrate the architecture, functionality, and operation of possible implementations of systems, methods and computer program products, according to various embodiments of the present disclosure. In this regard, each block in the block diagrams may represent a module, segment, or portion of code, which comprises one or more executable instructions for implementing the specified logical function(s). It should also be noted that, in some alternative implementations, the functions, discussed hereinabove, may occur out of the disclosed order. For example, two functions taught in succession may, in fact, be executed substantially concurrently, or the functions may sometimes be executed in the reverse order depending upon the functionality involved. It will also be noted that each block of the block diagrams, and combinations of blocks in the block diagrams, may be implemented by special purpose hardware-based systems that perform the specified functions or acts, or combinations of special purpose hardware and computer instructions.

## Claims

1. Method for the personalized development of products and services based on the matching with intrinsic personalized motivators, the method comprising:
(a) receiving in a controller unit a respective quantitative rating being indicative of a scaled value for each of the plurality of intrinsic motivators associated with a product or service to be personalized;
(b) receiving in a controller unit a respective quantitative rating being indicative of a scaled value for each of the plurality of intrinsic motivators associated with a test subject;
(c) assigning the respective quantitative rating obtained in step (a) with the respective quantitative rating obtained in step (b); and
(d) transmitting from the controller unit, based upon the assignment obtained in step (c), a profile of intrinsic motivators being indicative for the test subject in order to personalize a product or service.

2. The method of claim 1, wherein the plurality of intrinsic motivators in step (a) and step (b) independently comprises at least five, particularly at least ten, and more particularly at least 20 intrinsic motivators.

3. The method of claim 1 or 2, wherein the respective quantitative ratings obtained in step (a) and step (b) are calculated based on cumulative scaled values for the entire plurality of intrinsic motivators.

4. The method of any one of claims 1 to 3, further comprising the matching with the sensory perception of the test subject, comprising:
(b') receiving in a controller unit a respective quantitative rating being indicative of a scaled value for each preferred way of individual sensory perception associated with the test subject; and
(c) assigning the respective quantitative rating obtained in step (a) with the respective quantitative rating obtained in step (b), and the respective quantitative rating obtained in step (b').

5. The method of any one of claims 1 to 4, further comprising the matching with biometric and/or physiologic characteristics of the test subject, comprising:
(b") receiving in a controller unit a respective quantitative rating being indicative of a scaled value for each of the biometric and/or physiologic characteristics associated with the test subject; and
(c) assigning the respective quantitative rating obtained in step (a) with the respective quantitative rating obtained in step (b), the respective quantitative rating obtained in step (b"), and optionally the respective quantitative rating obtained in step (b').

6. The method of any one of claims 1 to 5, further comprising:
(e) storing the profile of intrinsic motivators obtained in step (d) on a computer-readable storage medium.

7. The method of claim 6, wherein the identity of the test subject is not disclosed along with the profile of intrinsic motivators determined.

8. The method of any one of claims 1 to 7, wherein the respective quantitative ratings obtained in step (a), step (b), step (b'), and step (b") are received in the controller unit based on manual input by means of keyboard or touchscreen.

9. The method of any one of claims 1 to 7, wherein the respective quantitative ratings obtained in step (a), step (b), step (b'), and step (b") are received in the controller unit based on speech input and/or based on visual input by means of a camera.

10. The method of any one of claims 1 to 9, wherein the respective quantitative ratings obtained in either one or both of step (a) and step (b) are determined by using standardized psychometric analyses.

11. The method of any one of claims 1 to 10, wherein the preferred ways of individual sensory perception determined in step (b') are selected from the group consisting of seeing, hearing, smelling, tasting, and touching.

12. The method of any one of claims 1 to 11, wherein the biometric and/or physiologic characteristics determined in step (b") are selected from the group consisting of face recognition parameters and electrical conductivity of the skin.

13. The method of any one of claims 1 to 12, further comprising:
(f) assigning the profile of intrinsic motivators obtained in step (d) with one or more chemical and/or physical parameters of the product or service being personalized.

14. The method of any one of claims 1 to 13, wherein the controller unit is part of a computer system.

15. Computer system being adapted for performing the personalization of products and services based on the matching with intrinsic personalized motivators, the system comprising:
a controller unit for receiving and processing a respective quantitative rating being indicative of a scaled value for each of the plurality of intrinsic motivators associated with a product or service to be personalized and for receiving and processing a respective quantitative rating being indicative of a scaled value for each of the plurality of intrinsic motivators associated with a test subject; and
a unit for transmitting from the controller unit, based upon the assignment of the respective quantitative ratings processed by the controller unit, a profile of intrinsic motivators being indicative for the test subject in order to personalize a product or service.
